# EUROPÄISCHE PATENTANMELDUNG

(11) **EP 1 314 466 A1**
(43) Veröffentlichungstag der Anmeldung: **28.05.2003**
(21) Anmeldenummer: 02024339.0
(22) Anmeldetag: 02.11.2002
(51) Int. Cl.: B01D 15/08, G01N 30/60

(54) **Verfahren zum Betreiben von Chromatographiesäulen und dafür geeignete Vorrichtung**

(30) Priorität: 23.11.2001 DE 10157585
(71) Anmelder: InfraServ GmbH & Co. Höchst KG, 65926 Frankfurt am Main (DE)
(72) Erfinder: Simon, Klaus-Jürgen, 65779 Kelkheim (DE); Itter, Klaus, 61184 Karben (DE)
(74) Vertreter: Ackermann, Joachim, Dr.

(57) **Zusammenfassung**

Beschrieben wird eine mit im Säulenkörper verfahrbar angebrachten Düsen und/oder Ultraschallgebern ausgestattete Chromatographiesäule. Damit lässt sich eine Säulenpackung nach Beendigung eines Chromatographievorganges ohne Entladung resuspendieren.

## Beschreibung

Die vorliegende Erfindung betrifft ein verbessertes Verfahren zum Betreiben von Chromatographiesäulen sowie eine dafür geeignete Vorrichtung.

Aus der DE-C-1,993,255 ist eine Chromatographiesäule mit Drehgestell bekannt, deren Säulenkörper um senkrecht zur Zylinderlängsachse verlaufende Achse drehbar gelagert ist.

Aus der EP-A-1,074,835 ist eine Chromatographiesäule der oben genannten Art bekannt, die mehrere Aufschlämmeinheiten aufweist, wobei mindestens zwei der Aufschlämmeinheiten in einem bestimmten Abstand zur Zylinderachse der Chromatographiesäule angeordnet sind.

Chromatographiesäulen der eingangs genannten Art oder auch anderer Art werden ansatzweise betrieben und die Packung dieser Säulen muss nach jedem Ansatz entfernt werden. Derartige Operationen sind zeit- und kostenaufwendig.

Aufgabe der vorliegenden ist ein verbessertes Verfahren zum Betreiben von Chromatographiesäulen sowie eine daran angepasste Vorrichtung, welches sich durch einen verringerten Materialverbrauch, insbesondere an Packungs-material und Chromatographieflüssigkeiten auszeichnet, und dass einfach zu handhaben ist.

Diese Aufgabe wird gelöst durch das erfindungsgemäße Verfahren sowie durch die erfindungsgemäße Chromatographiesäule.

Die erfindungsgemäße Chromatographiesäule weist einen Säulenkörper auf, der eine Packung aus Füllgut enthält, einen den Säulenkörper jeweils abdichtenden oberen und unteren Deckel, von denen zumindest einer in Richtung der Längsachse des Säulenkörpers beweglich ist, ohne dass dabei die Abdichtung verloren geht, sowie mindestens zwei unterhalb des oberen Deckels und/oder oberhalb des unteren Deckels angebrachte Düsen und/oder Ultraschallgeber, die innerhalb des Säulenkörpers angeordnet sind und die in Richtung der Längsachse des Säulenkörpers verfahrbar sind.

Das erfindungsgemäße Verfahren ist gekennzeichnet durch die Maßnahmen:
a) Bewegung des oberen und/oder des unteren Deckels um eine derartige Strecke, so dass zwischen der Oberfläche des Füllguts und der Innenseite des Deckels ein Zwischenraum entsteht, der Deckel aber weiterhin den Säulenkörper abdichtet und die beweglichen Düsen sich in einer Ausgangsposition befinden,
b) Eindüsen von Flüssigkeit und/oder von Gasen durch die Düsen in den Zwischenraum, der durch die Bewegung nach Schritt a) zwischen der Oberfläche des Füllguts und der Innenseite des Deckels entstanden ist und/oder Beaufschlagung der Oberfläche des Füllguts mit Ultraschall,
c) Bewegen der beweglichen Düsen und/oder der Ultraschallgeber in Richtung der Längsachse des Säulenkörpers unter Fortsetzung des Eindüsens von Flüssigkeit und/oder von Gasen und/oder der Beaufschlagung mit Ultraschall, so dass zumindest ein wesentlicher Anteil der vom vorangegangenen Trennvorgang sich im Säulenkörper befindlichen festen Packung des Füllguts suspendiert wird,
d) Unterbrechen des Eindüsens von Flüssigkeit und/oder von Gasen und/oder der Beaufschlagung mit Ultraschall und Zurückbewegen der beweglichen Düsen und/oder Ultraschallgeber in deren Ausgangsposition, so dass sich das suspendierte Füllgut im Säulenkörper unter Ausbildung einer neuen Packung absetzen kann und
e) Bewegung des oberen und/oder des unteren Deckels um eine derartige Strecke, so dass der zwischen Oberfläche des Füllguts und der Innenseite des Deckels entstandene Zwischenraum verschwindet und die Chromatographiesäule für einen erneuten Trennvorgang zur Verfügung steht.

In einer bevorzugten Ausführungsform der erfindungsgemäßen Vorrichtung wird ein Deckel eingesetzt, der eine Metallplatte und eine damit verbundene weitere Platte auf der dem Füllgut zugewandten Seite aufweist, insbesondere eine weitere Platte aus elastischem Material oder aus Metall, das auf der dem Füllgut zugewandten Seite mit elastischem Material beschichtet ist.

In einer weiteren bevorzugten Ausführungsform weist die erfindungsgemäße Vorrichtung mehrere Düsen und/oder Ultraschallgeber auf, die unterhalb des oberen Deckels angebracht sind.

Die beweglichen Düsen und/oder Ultraschallgeber können in beliebiger Art und Weise konstruktiv ausgestaltet sein, solange sie eine Bewegung in Richtung der Längsachse des Säulenkörpers gestatten und ein Eindüsen von Flüssigkeit und/oder von Gasen und/oder eine Beaufschlagung mit Ultraschall zum Resuspendieren der Packung möglich ist.

Die Düsen und/oder Ultraschallgeber können an einem Verteiler angebracht sein und zusammen mit diesem während des Eindüsens bzw. der Beaufschlagung mit Ultraschall bewegt werden. Es kann sich aber auch um Düsen bzw. um Ultraschallgeber handeln, die jeweils einzeln bewegbar sind. Bevorzugt werden Düsen und/oder Ultraschallgeber eingesetzt, die mit einem Teleskoprohr verbunden sind.

Die Bewegung der Düsen und/oder Ultraschallgeber kann auf beliebige Weise erfolgen. Beispiele dafür sind mechanische, elektromechanische, hydraulische oder pneumatische Antriebe.

In einer weiteren bevorzugten Ausführungsform sind Düsen und/oder Ultraschallgeber am Deckel vorgesehen und in einem Abstand von mindestens D/6 zur Zylinderlängsachse angeordnet.

Besonders bevorzugt sind mindestens vier Düsen und/oder Ultraschallgeber vorgesehen, die in einem Abstand von etwa D/4 symmetrisch um die Zylinderlängsachse angeordnet sind.

Während des Resuspendierens des Füllguts können die Ein- und Auslassöffnungen der Chromatographiesäule geöffnet oder geschlossen sein.

Bevorzugt sind alle Ein- und Auslassöffnungen der Chromatographiesäule während der Suspension der festen Packung des Füllgutes geschlossen. Die durch das Eindüsen in den Säulenkörper eingebrachte Flüssigkeit sammelt sich bei dieser Ausführungsform in den durch die Bewegung des Deckels entstandenen Zwischenraum und wird nach dem Resuspensionsvorgang aus der Säule entfernt, beispielsweise durch das Zurückbewegen des Deckels in seine Ausgangsposition bei geöffneter Auslassöffnung der Säule.

In einer besonders bevorzugten Ausführungsform wird die Spülflüssigkeit im Kreislauf geführt und für mehrere Resuspendierungsvorgänge verwendet.

Nach dem Resuspendieren des Füllgutes und der Wiederherstellung des Ausgangszustandes der Säule wird diese vorteilhafterweise einer Sterilisation unterworfen, beispielsweise durch Erhitzen im Bereich von 90 - 130°C.
Nach dem Resuspendieren und gegebenenfalls mindestens einem Spülvorgang steht die Säule für einen erneuten Chromatographievorgang zur Verfügung.

## Patentansprüche

1. Chromatographiesäule mit einem Säulenkörper, der eine Packung aus Füllgut enthält, einen den Säulenkörper jeweils abdichtenden oberen und unteren Deckel, von denen zumindest einer in Richtung der Längsachse des Säulenkörpers beweglich ist, ohne dass dabei die Abdichtung verloren geht, sowie mindestens zwei unterhalb des oberen Deckels und/oder oberhalb des unteren Deckels und innerhalb des Säulenkörpers angebrachte Düsen und/oder Ultraschallgeber, **dadurch gekennzeichnet, dass** die Düsen und/oder Ultraschallgeber in Richtung der Längsachse des Säulenkörpers verfahrbar sind.

2. Chromatographiesäule nach Anspruch 1, **dadurch gekennzeichnet, dass** ein Deckel vorgesehen ist, der eine Metallplatte und eine damit verbundene weitere Platte auf der dem Füllgut zugewandten Seite aufweist, insbesondere eine weitere Platte aus elastischem Material oder aus Metall, das auf der dem Füllgut zugewandten Seite mit elastischem Material beschichtet ist.

3. Chromatographiesäule nach Anspruch 1, **dadurch gekennzeichnet, dass** mehrere Düsen und/oder Ultraschallgeber unterhalb des oberen Deckels angebracht sind.

4. Chromatographiesäule nach Anspruch 1, **dadurch gekennzeichnet, dass** die Düsen und/oder Ultraschallgeber mit einem Teleskoprohr verbunden sind.

5. Chromatographiesäule nach Anspruch 1, **dadurch gekennzeichnet, dass** die Düsen und/oder Ultraschallgeber am Deckel vorgesehen sind und in einem Abstand von mindestens D/6 zur Zylinderlängsachse angeordnet sind, vorzugsweise mindestens vier Düsen und/oder Ultraschallgeber vorgesehen sind, die in einem Abstand von etwa D/4 symmetrisch um die Zylinderlängsachse angeordnet sind.

6. Verfahren zum Betreiben von Chromatographiesäulen nach Anspruch 1 umfassend die Massnahmen:
a) Bewegung des oberen und/oder des unteren Deckels um eine derartige Strecke, so dass zwischen der Oberfläche des Füllguts und der Innenseite des Deckels ein Zwischenraum entsteht, der Deckel aber weiterhin den Säulenkörper abdichtet und die beweglichen Düsen und/oder Ultraschallgeber sich in einer Ausgangsposition befinden,
b) Eindüsen von Flüssigkeit und/oder von Gasen durch die Düsen in den Zwischenraum, der durch die Bewegung nach Schritt a) zwischen der Oberfläche des Füllguts und der Innenseite des Deckels entstanden ist, und/oder Beaufschlagung der Oberfläche des Füllguts mit Ultraschall,
c) Bewegen der beweglichen Düsen und/oder Ultraschallgeber in Richtung der Längsachse des Säulenkörpers unter Fortsetzung des Eindüsens von Flüssigkeit und/oder von Gasen und/oder der Beaufschlagung mit Ultraschall, so dass zumindest ein wesentlicher Anteil der vom vorangegangenen Trennvorgang sich im Säulenkörper befindlichen festen Packung des Füllguts suspendiert wird,
d) Unterbrechen des Eindüsens von Flüssigkeit und/oder von Gasen und/oder der Beaufschlagung mit Ultraschall und Zurückbewegen der beweglichen Düsen und/oder Ultraschallgeber in deren Ausgangs-position, so dass sich das suspendierte Füllgut im Säulenkörper unter Ausbildung einer neuen Packung absetzen kann und
e) Bewegung des oberen und/oder des unteren Deckels um eine derartige Strecke, so dass der zwischen Oberfläche des Füllguts und der Innenseite des Deckels entstandende Zwischenraum verschwindet und die Chromatographiesäule für einen erneuten Trennvorgang zur Verfügung steht.

7. Verfahren nach Anspruch 6, **dadurch gekennzeichnet, dass** alle Ein- und Auslassöffnungen der Chromatographiesäule während der Suspension der festen Packung des Füllgutes geschlossen sind, und dass die durch das Eindüsen in den Säulenkörper eingebrachte Flüssigkeit sich in den durch die Bewegung des Deckels entstandenen Zwischenraum ansammelt.

8. Verfahren nach Anspruch 6, **dadurch gekennzeichnet, dass** die zur Resuspendierung des Füllgutes eingedüste Flüssigkeit im Kreis geführt wird.

9. Verfahren nach Anspruch 6, **dadurch gekennzeichnet, dass** die Chromatographiesäule nach der Resuspendierung des Füllgutes einer Sterilisation unterworfen wird.
